(19) Europäisches Patentamt
European Patent Office
Office européen des brevets

(11) **EP 1 844 962 B1**

(12) **FASCICULE DE BREVET EUROPEEN**

(45) Date de publication et mention
de la délivrance du brevet:
**17.12.2008 Bulletin 2008/51**

(51) Int Cl.:
***B60G 17/016*** (2006.01)  ***B60G 17/018*** (2006.01)

(21) Numéro de dépôt: **07300904.5**

(22) Date de dépôt: **28.03.2007**

(54) **Procédé de commande de suspension pour véhicule automobile et système intégrant le procédé de commande**

Verfahren zur Steuerung der Federung eines Kraftfahrzeugs und System, in das dieses Steuerungsverfahren integriert ist

Method of controlling the suspension of an automobile and system including the control method

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **14.04.2006 FR 0603361**

(43) Date de publication de la demande:
**17.10.2007 Bulletin 2007/42**

(73) Titulaire: **Peugeot Citroën Automobiles SA
78140 Vélizy-Villacoublay (FR)**

(72) Inventeurs:
• **Martin, Joël Hervé
94000 Creteil (FR)**
• **Camp, Stéphane
92800 Puteaux (FR)**

(56) Documents cités:
**EP-A1- 0 426 338**   **DE-A1- 4 418 625**
**US-B2- 6 701 235**

**Description**

Le domaine de l'invention est celui des systèmes de suspension pour véhicule automobile et notamment celui des suspensions semi-actives.

La demande des automobilistes, et du marché automobile en général, impose aux constructeurs de rechercher des systèmes dans le domaine des liaisons au sol, permettant d'accroître le confort et la sécurité des passagers à bord des véhicules. Les systèmes classiques de suspension ne permettent plus d'augmenter significativement ce confort et cette sécurité tant le compromis entre ces deux notions est difficile à trouver.

De manière générale, un système de suspension doit assurer plusieurs fonctions telle que la tenue de route, conservant les vibrations transmises à la caisse aussi faibles que possible, distribuant les forces reçues, dues par exemple aux accélérations ou décélérations de la vitesse du véhicule ou à des changements de direction, mais également le confort ressenti par un passager à bord du véhicule.

Plusieurs types de suspension ont déjà été proposés, et sont regroupés en trois principales catégories : les suspensions passives, les suspensions semi-actives et les suspensions actives.

Dans les suspensions passives, les suspensions ont un coefficient d'amortissement fixe et non linéaire en fonction de la vitesse de débattement. Dans les suspensions actives, les suspensions fournissent un effort qui peut varier continument sous le contrôle d'un système utilisant par exemple des moyens hydrauliques, permettant d'adapter l'amortissement aux conditions de la route.

Le comportement des suspensions semi-actives est identique à celui des suspensions actives. Cependant alors que dans ces dernières, il est nécessaire de recourir à une force externe pour contrôler les facteurs d'amortissement, dans les suspensions semi-actives, le contrôle est opéré uniquement en dissipant l'énergie présente.

Les suspensions semi-actives représentent ainsi une solution intermédiaire permettant de disposer de performances intéressantes à moindre coût.

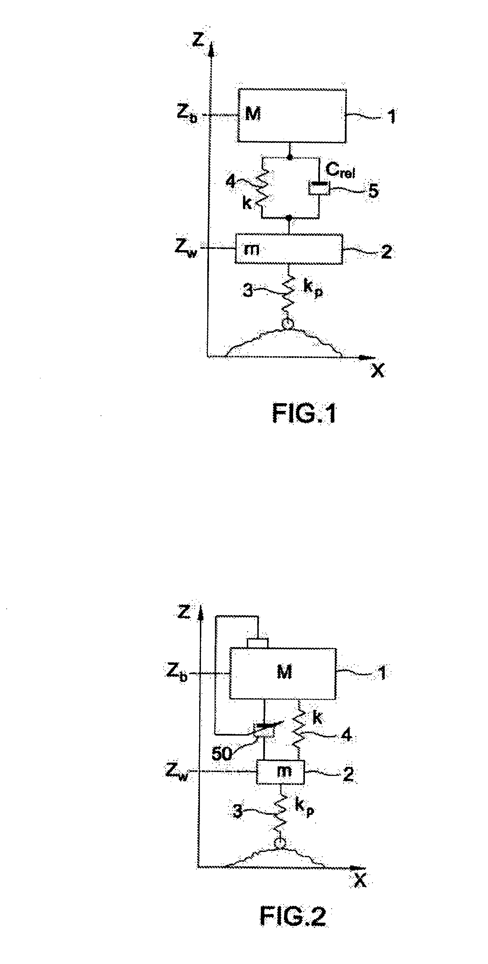

Le comportement d'un système de suspension passive peut être déterminer en utilisant par exemple le modèle illustré à la figure 1, incluant une masse suspendue 1 de masse M, représentant la masse de la caisse et une masse non-suspendue 2 de masse m représentant la masse de la roue. La masse non-suspendue 2 est couplée à la route par un ressort 3 de rigidité kp, correspondant à la rigidité pneumatique.

La masse suspendue 1 est couplée à la masse non-suspendue 2 par un amortisseur, qui comprend un ressort 4, de rigidité k et un actionneur 5 ayant un coefficient constant Crel.

D'après le principe de D'Alembert appliqué au système illustré en figure 1, le modèle mathématique suivant peut être déduit :

$$M.\ddot{z}_b = -k.(z_b - z_w) - C_{rel}.(\dot{z}_b - \dot{z}_W)$$

$$m.\ddot{z}_w = k.(z_b - z_w) - k_p.(z_w - h) + C_{rel}.(\dot{z}_b - \dot{z}_W)$$

avec

zb : position verticale de la caisse
zw : position verticale de la roue

$(\dot{z}_b - \dot{z}_W)$ : représente la vitesse de débattement de la caisse à la roue.

La dérivée seconde de $z_b$, qui est l'accélération verticale de la caisse, est un indice possible du confort assuré par la suspension : plus cette dérivée est faible plus grand en est le confort.

La force exercée par la masse non suspendue 2 soit la roue, sur la route est un indice de la tenue de route. Plus cette dernière force est élevée (jusqu'à une limite optimale supérieure) meilleure en est la tenue de route.

Les limitations du système de suspension passive résident dans le fait qu'un seul coefficient Crel (en fonction de débattement de l'amortisseur) est présent pour ajuster les deux indices de confort et de tenue de route, ne permettant pas une optimisation élevée alors que ces deux indices sont indépendants l'un de l'autre.

En principe, ce problème peut être résolu en augmentant le nombre de paramètres, ce qui implique que la force exercée par l'actionneur dépende de plus d'un paramètre unique. Une solution proposée est décrite dans l'approche communément appelée « Sky Hook ».

Selon cette approche, la force exercée sur la caisse est proportionnelle à la vitesse absolue de la caisse dans un référentiel inertiel et à la vitesse relative entre la caisse et la roue.

Comme, la masse suspendue ne peut être directement connectée à la terre, le ciel est choisi comme système référentiel et la masse suspendue est considérée par rapport à cette référence. Le modèle illustré en figure 2 est ainsi adopté. L'actionneur 50 dans ce système, a un coefficient Csky variable ajusté avec retour depuis la masse 1 de la caisse vers l'actionneur 50 qui donnent la force Fam appliquée à l'actionneur 50.

Le modèle mathématique qui en découle est illustré par les équations suivantes

$$M.\ddot{z}_b = -k.(z_b - z_w) - F_{am}$$

$$m.\ddot{z}_w = k.(z_b - z_w) - k_p.(z_w - h) + F_{am}$$

La force Fam est proportionnelle à la vitesse absolue de la caisse et à la vitesse de débattement et répond ainsi à l'équation suivante :

$$F_{am}(t) = C_{rel}(t).V_{rel}(t) + C_{sky}(t).V_{abs}(t) = C_{rel}.(\dot{z}_b - \dot{z}_w) + C_{sky}.\dot{z}_b$$

Dans le cas de la suspension semi-active :

$$F_{am} = 0 \quad \text{pour} \quad F_{am}(\dot{z}_b - \dot{z}_w) < 0$$

Dans ce contexte, l'invention propose un nouveau système de suspension utilisant un procédé original pour déterminer les efforts à appliquer à l'actionneur 50, à partir d'informations extraites de retour d'expérience. Ce procédé permet en temps réel de fournir une commande d'effort optimisée en utilisant des données capitalisées préalablement.

Plus précisément, le procédé selon l'invention propose de constituer une table à trois dimensions obtenue à partir de la vitesse longitudinale d'un véhicule et de la vitesse de débattement relative entre la caisse et la roue, cette table fournit une information de force à appliquer à l'actionneur. Puis d'aller chercher, au cas par cas, en situation de vie, après détection des paramètres de débattement et de vitesse longitudinale du véhicule, en temps réel, l'information d'effort à appliquer à l'actionneur de la suspension, dans cette table.

La manière de paramétrer cette table répond au besoin de typage différenciant les véhicules et permet d'utiliser les connaissances capitalisées dans le paramétrage des systèmes de suspensions passives.

On connaît, des documents EP 0 426 338 A et US6,701,235 B, des procédés de commande de suspension pour véhicule, notamment pour véhicule automobile, conformes au préambule de la revendication 1.

Le procédé selon l'invention est caractérisé en ce qu'il comprend en outre les étapes suivantes :

- la constitution d'une table donnant les relevés de l'effort à fournir à l'actionneur couplé à la roue à partir de relevés de vitesse longitudinale de véhicule et de relevés de vitesse de débattement
- la détection de la vitesse longitudinale du véhicule en cours de déplacement
- la détection de la vitesse de débattement au niveau d'une roue
- la déduction depuis la table pré-constituée, d'une valeur d'effort à fournir à l'actionneur couplé à la roue, à partir de la vitesse longitudinale du véhicule et de la vitesse de débattement
- la commande de l'actionneur depuis la valeur de l'effort.

Selon une variante de l'invention, le procédé comprend en outre une étape d'adaptation de l'effort à la masse suspendue corrélée au relevé d'effort obtenu depuis la table, pour déterminer une valeur affinée de l'effort à appliquer à l'actionneur.

Selon une autre variante de l'invention, la table est établie à partir de valeurs absolues de vitesses de débattement.

Dans ce cas, le procédé de l'invention comprend une étape de reprise de dissymétrisation compression/détente, lorsque la table a été constituée à partir des valeurs absolues des vitesses de débattement, pour des raisons de simplification.

En effet, il existe de manière générale une dissymétrie de l'effort à appliquer en détente et en compression.

Un effort trop important en compression peut introduire des chocs (roue rencontrant un obstacle) et par conséquent imprimer à la caisse des accélérations ascendantes inconfortables voire destructrices. Il doit en revanche être suffisant pour éviter d'aller trop souvent en butée. En détente, par contre on peut freiner plus fortement le mouvement de la roue sans introduire des accélérations verticales trop importantes. Malgré tout, un effort trop important en détente peut dégrader le contact roue-sol sur route bosselée et provoquer aussi de l'inconfort.

On connaît, également des documents EP 0 426 338 A et US 6,701,235 B, des systèmes de suspension pour véhicule, notamment pour véhicule automobile, conformes au préambule de la revendication 4.

Le système selon l'invetion est, caractérisé en ce qu'il comprend au moins un calculateur permettant de fournir une valeur d'effort à l'actionneur selon le procédé de l'invention à partir d'informations de vitesse de débattement et de vitesse du véhicule en cours de déplacement.

Selon une variante, l'actionneur est un actionneur semi-actif.

Selon une autre variante de l'invention, le système de commande comprend un calculateur central commandant l'ensemble des actionneurs couplés aux différentes roues.

Selon une autre variante de l'invention, le système de commande comprend au moins un calculateur local décentralisé couplé à au moins une roue.

Selon une autre variante, Il comprend à la fois des calculateurs délocalisés couplés à chacune des roues et un calculateur central

L'intérêt de la présente invention est aussi d'être adaptée à une architecture de calcul décentralisée localement aux niveaux de chaque roue ; chaque suspension étant traitée de manière indépendante des autres.

L'invention sera mieux comprise et d'autres avantages apparaitront à la lecture de la description qui va suivre donnée à titre non limitatif et grâce aux figures annexées parmi lesquelles :

- la figure 1, déjà décrite, illustre un schéma de suspension passive selon l'art connu ;
- la figure 2, déjà décrite, illustre un schéma de suspension active ou semi-active selon l'art connu ;- la figure 3 illustre un exemple de table pouvant être utilisée dans le procédé de l'invention ;
- la figure 4 schématise les étapes de procédé utilisées dans le procédé de l'invention et comportant une étape d'adaptation d'effort normalisé à la masse suspendue ;
- la figure 5 illustre un exemple de véhicule utilisant un premier système de commande de suspension selon l'invention et comportant un calculateur central ; et
- la figure 6 illustre un exemple de véhicule utilisant un second système de commande de suspension selon l'invention et comportant des calculateurs locaux couplés à chacune des roues.

De manière générale, le procédé de commande selon l'invention propose de constituer, au préalable, une table de données répertoriant pour des vitesses de véhicule et des vitesses de débattement données, les efforts nécessaires à appliquer à un actionneur couplé à une roue.

Durant le déplacement du véhicule, des moyens de détection permettent de fournir en temps réel, les paramètres de vitesse longitudinale du véhicule et de vitesse de débattement. Ces paramètres sont corrélés à la table et une valeur d'effort est déterminée pour être appliquée à l'actionneur.

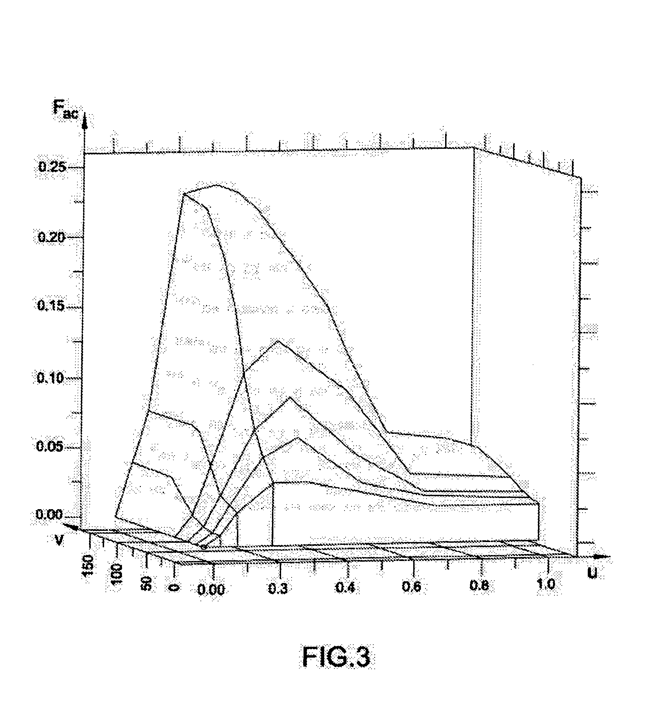

Selon une première variante de l'invention, on peut ainsi obtenir directement depuis les paramètres vitesse de débattement u, vitesse longitudinale v et la table pré-établie $A_b$, l'effort Fac absolu à appliquer à l'actionneur. La figure 3 illustre un exemple de table préétablie $A_b$.

Selon une variante de l'invention, il est prévu en amont de définir une étape d'adaptation de la valeur d'effort $F_{ac0}$ à la masse suspendue m à la roue avec prise en compte des transferts de charge

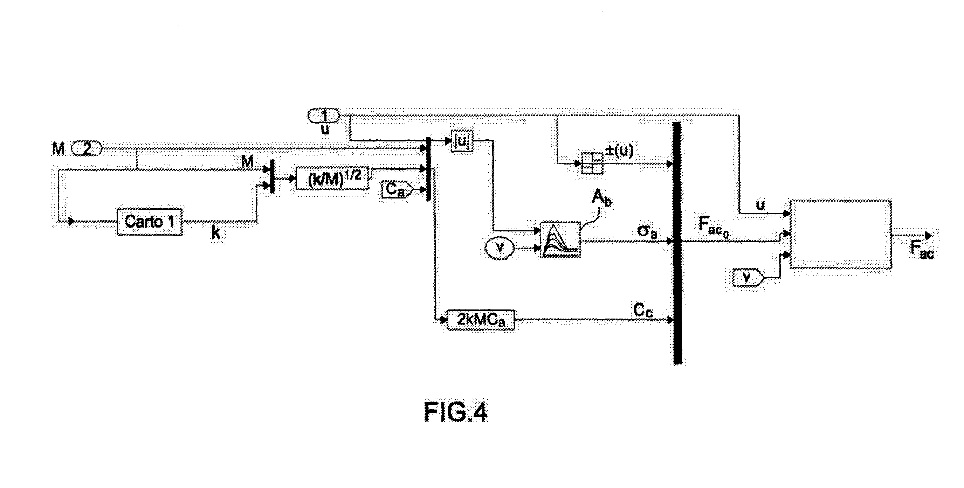

Pour cela, on implémente les étapes de traitement suivantes illustrées sur l'organigramme de la figure 4.

Etape 1 :

A partir de définitions techniques du véhicule, prenant en compte la masse du véhicule, on établit une cartographie Carto1 permettant de fournir un coefficient de raideur k du véhicule pour un point de fonctionnement donné à partir d'une valeur d'effort statique lié à la masse du véhicule M.

On peut alors obtenir une fréquence propre f dépendante du paramètre $(k/M)^{1/2}$.

On définit, en parallèle, un coefficient d'amortissement réduit cible désiré à la roue $C_a$.

On traite alors les grandeurs u, M et $C_a$ pour obtenir un coefficient critique d'amortissement $C_c$ suivant la formule :

$$C_c = 2\, k \times M \times C_a$$

Etape 2 :

On utilise, selon l'invention, une table pré-constituée $A_b$ à trois dimensions, qui à partir d'une valeur absolue de vitesse de débattement et d'une valeur de vitesse longitudinale du véhicule, fournit un taux d'effort normalisé $\sigma_a$.

Il est à noter qu'il peut être avantageux d'établir une table relativement simplifiée ne tenant pas compte de la dissymétrie des efforts à appliquer à l'amortisseur selon qu'il s'agit d'un effort à appliquer en mode détente ou en mode compression; cette table $A_b$ étant donc établie à partir de valeurs absolues de vitesse de débattement.

Ce taux d'effort normalisé est multiplié au coefficient $C_c$ et au signé de la vitesse de débattement pour fournir une valeur d'effort $F_{ac0}$

Etape 3 :

Selon cet exemple, ayant utilisé une table à trois dimensions simplifiée, à partir de la vitesse de débattement absolue, une dernière étape du procédé consiste à réajuster la valeur d'effort préalablement définie $F_{ac0}$, en fonction du signe de la vitesse de débattement et de la vitesse du véhicule puisque la loi de dissymétrie souhaitée est choisie variable selon la vitesse du véhicule.

On définit ainsi une valeur d'effort $F_{ac}$.

Pour cela, le paramètre taux d'effort $\sigma_a$, la valeur de la vitesse de débattement u et la vitesse v du véhicule sont multipliés pour déterminer la valeur de l'effort $F_{ac}$.

Pour cela, le paramètre taux d'effort $\sigma_a$, la valeur de la vitesse de débattement u et la vitesse v du véhicule sont multipliés pour déterminer la valeur de l'effort $F_{ac}$.

Exemple 1

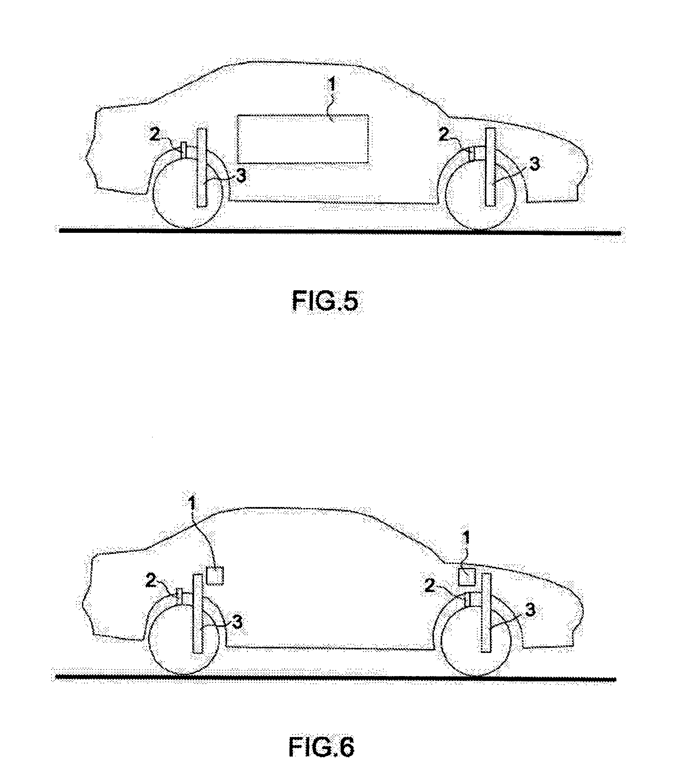

Selon une première variante de l'invention, le véhicule automobile comporte, comme illustré en figure 5, un calculateur central 1 relié à quatre actionneurs 3 (un par roue) dont sont équipées les suspensions au niveau des quatre roues du véhicule. Sur la figure, seuls les actionneurs 3 des roues avant droite et arrière droite sont représentés. Chaque roue est également couplée à un détecteur 2 capable de fournir une information de vitesse de débattement au niveau de ladite roue. Le calculateur central 1 met en oeuvre le procédé selon l'invention en implémentant la stratégie de contrôle de la détermination des forces $F_{ac}$ et la commande desdites forces sur les actionneurs. Il est alimenté en information de vitesse longitudinale du véhicule issue d'un système de détection de la vitesse longitudinale (non représenté).

Exemple 2

Selon une seconde variante de l'invention, le véhicule automobile comporte des calculateurs délocalisés 1 et couplés à chacune des roues, comme illustré en figure 6.

Il est également envisageable de cumuler l'emploi d'un calculateur central et de calculateurs locaux, le calculateur central pouvant notamment gérer les informations de vitesse longitudinale du véhicule alors que les calculateurs délocalisés gèrent les informations de vitesses de débattement au niveau des roues.

**Revendications**

**1.** Procédé de commande de suspension pour véhicule, notamment pour véhicule automobile, comportant une caisse (1), au moins une roue, un système de suspension comportant au moins un actionneur (50) couplé à la roue, **caractérisé en ce qu'**il comprend les étapes suivantes :

- une étape de pré-constitution d'une table ($A_b$) donnant les relevés de l'effort à fournir à l'actionneur (50) couplé à la roue à partir de relevés de vitesses longitudinales (v) du véhicule et de relevés de vitesses de débattement (u) ;
- une étape de détection de la vitesse longitudinale (v) du véhicule en cours de déplacement ;
- une étape de détection de la vitesse de débattement (u) au niveau de la roue ;
- une étape de déduction depuis la table pré-constituée ($A_b$), d'une valeur d'effort ($F_{ac0}$) à fournir à l'actionneur couplé à la roue, à partir de la vitesse longitudinale (v) du véhicule et de la vitesse de débattement (u) ; et
- une étape de commande de l'actionneur (50) depuis la valeur de l'effort ($F_{ac0}$).

**2.** Procédé de commande selon la revendication 1, **caractérisé en ce qu'**il comprend en outre une étape d'adaptation de l'effort à la masse suspendue (m) corrélée au relevé d'effort depuis la table ($A_b$), pour déterminer une valeur affinée de l'effort à appliquer à l'actionneur (50).

**3.** Procédé de commande selon l'une des revendications 1 ou 2, **caractérisé en ce que** la table ($A_b$) est établie à partir de valeurs absolues de vitesse de débattement (u) et qu'il comprend en outre une étape de reprise de dissymétrisation compression/détente.

**4.** Système de commande de suspension pour véhicule, notamment pour véhicule automobile, comportant une caisse, au moins une roue, une suspension comportant au moins un actionneur (3) couplé à la roue, un détecteur de vitesse de débattement (2), **caractérisé en ce qu'**il comprend au moins un calculateur (1) permettant de fournir une valeur d'effort ($F_{ac}$) à l'actionneur selon le procédé d'une des revendications 1 à 3 à partir d'informations de vitesse de débattement (u) et de vitesse (v) de véhicule.

**5.** Système de commande selon la revendication 4, **caractérisé en ce que** l'actionneur (3) est semi-actif.

**6.** Système de commande selon l'une des revendications 4 ou 5, **caractérisé en ce que** le véhicule comporte au moins deux roues et au moins un actionneur (3) couplé à chaque roue.

**7.** Système de commande selon la revendication 6, **caractérisé en ce qu'**il comprend un calculateur central (1) commandant l'ensemble des actionneurs (3) couplés aux différentes roues.

**8.** Système de commande selon la revendication 6, **caractérisé en ce qu'**il comprend au moins un calculateur (1) local décentralisé au niveau d'au moins une roue.

**9.** Système de commande selon la revendication 6, **caractérisé en ce que** chaque roue est couplée à un calculateur (1) local décentralisé et qu'il comprend en outre un calculateur central coopérant avec chaque calculateur local (1).

## Claims

**1.** Method of controlling a vehicle suspension, particularly for a motor vehicle, comprising a body (1), at least one wheel, a suspension system comprising at least one actuator (50) coupled to the wheel, **characterized in that** it involves the following steps:

- a step of advance creation of a table ($A_b$) providing readings of the force to be applied to the actuator (50) coupled to the wheel on the basis of readings concerning the longitudinal speeds (v) of the vehicle and readings concerning the rate of travel (u);
- a step of detecting the longitudinal speed (v) of the vehicle as it is moving along;
- a step of detecting the rate of travel (u) at the wheel;
- a step of deducing, from the table ($A_b$) created in advance, a value of the force ($F_{ac0}$) to be applied to the actuator coupled to the wheel on the basis of the longitudinal speed (v) of the vehicle and of the rate of travel (u); and
- a step of controlling the actuator (50) on the basis of the value of the force ($F_{ac0}$).

**2.** Control method according to Claim 1, **characterized in that** it further comprises a step of adapting the force according to the suspended mass (m) correlated with the force reading from the table ($A_b$), in order to determine a refined value of the force to be applied to the actuator (50).

**3.** Control method according to one of Claims 1 or 2, **characterized in that** the table ($A_b$) is created on the basis of absolute values of the rate of travel (u) and **in that** it further involves a step of reintroducing a symmetry into account for compression/extension.

**4.** System for controlling a vehicle suspension, particularly for a motor vehicle, comprising a body, at least one wheel, a suspension comprising at least one actuator (3) coupled to the wheel, a rate-of-travel detector (2); **characterized in that** it comprises at least one computer (1) able to provide a value for the force ($F_{ac}$) at the actuator according to the method of one of Claims 1 to 3 on the basis of information regarding the rate of travel (u) and the vehicle speed (v).

**5.** Control system according to Claim 4, **characterized in that** the actuator (3) is semi-active.

**6.** Control system according to one of Claims 4 or 5, **characterized in that** the vehicle comprises at least two wheels and at least one actuator (3) coupled to each wheel.

**7.** Control system according to Claim 6, **characterized in that** it comprises a central computer (1) controlling all of the actuators (3) coupled to the various wheels.

**8.** Control system according to Claim 6, **characterized in that** it comprises at least one local computer (1) that is decentralized and located at least near one wheel.

**9.** Control system according to Claim 6, **characterized in that** each wheel is coupled to a decentralised local computer (1) and **in that** it further comprises a central computer collaborating with each local computer (1).

**Patentansprüche**

**1.** Verfahren zur Steuerung der Federung für ein Fahrzeug, insbesondere für ein Kraftfahrzeug, das einen Kasten (1), mindestens ein Rad und ein Federungssystem aufweist, welches mindestens einen mit dem Rad gekoppelten Aktuator (50) aufweist, **dadurch gekennzeichnet, dass** es mindestens die folgenden Schritte aufweist:

- einen Schritt der Vorerstellung einer Tabelle ($A_b$), die die Aufstellungen über die Kraft aufführt, die dem mit dem Rad gekoppelten Aktuator (50) zuzuführen ist, ausgehend von Aufstellungen über Längsgeschwindigkeiten (v) des Fahrzeugs und von Aufstellungen über Federweggeschwindigkeiten (u);
- einen Schritt des Detektierens der Längsgeschwindigkeit (v) des Fahrzeugs im Laufe seiner Fortbewegung;
- einen Schritt des Detektierens der Federweggeschwindigkeit (u) auf der Ebene des Rads;
- einen Schritt des Ableitens aus der vorerstellten Tabelle ($A_b$) eines Werts der Kraft ($F_{ac0}$), die dem mit dem Rad gekoppelten Aktuator (50) zuzuführen ist, ausgehend von der Längsgeschwindigkeit (v) des Fahrzeugs und der Federweggeschwindigkeit (u);
- einen Schritt des Steuerns des Aktuators (50) gemäß dem Kraftwert ($F_{ac0}$).

**2.** Verfahren zur Steuerung nach Anspruch 1, **dadurch gekennzeichnet, dass** es ferner einen Schritt des Anpassens der Kraft an die aufgehängte Masse (m) aufweist, korreliert mit der Aufstellung der Kraft aus der Tabelle ($A_b$), um einen verfeinerten Wert der an den Aktuator (50) anzulegenden Kraft zu erhalten.

**3.** Verfahren zur Steuerung nach Anspruch 1 oder 2, **dadurch gekennzeichnet, dass** die Tabelle ($A_b$) ausgehend von absoluten Werten der Federweggeschwindigkeit (u) erstellt wird und es ferner einen Schritt des Aufgreifens der Asymmetrisierung Kompression/Entspannung aufweist.

**4.** System zur Steuerung der Federung für ein Fahrzeug, insbesondere für ein Kraftfahrzeug, das einen Kasten, mindestens ein Rad, eine Federung, die mindestens einen mit dem Rad gekoppelten Aktuator (3) aufweist, und einen Federweg-Geschwindigkeitsdetektor (2) aufweist, **dadurch gekennzeichnet, dass** es mindestens einen Rechner (1) aufweist, der die Bereitstellung eines Werts der Kraft ($F_{ac}$) für den Aktuator gemäß dem Verfahren nach einem der Ansprüche 1 bis 3, ausgehend von Informationen über die Federweggeschwindigkeit (u) und die Geschwindigkeit (v) des Fahrzeugs, ermöglicht.

**5.** System zur Steuerung nach Anspruch 4, **dadurch gekennzeichnet, dass** der Aktuator (3) semiaktiv ist.

**6.** System zur Steuerung nach Anspruch 4 oder 5, **dadurch gekennzeichnet, dass** das Fahrzeug mindestens zwei Räder und mindestens einen mit jedem der Räder gekoppelten Aktuator (3) aufweist.

**7.** System zur Steuerung nach Anspruch 6, **dadurch gekennzeichnet, dass** es einen Zentralrechner (1) aufweist, der die Gesamtheit der mit den verschiedenen Rädern gekoppelten Aktuatoren (3) steuert.

**8.** System zur Steuerung nach Anspruch 6, **dadurch gekennzeichnet, dass** es mindestens einen lokalen, dezentralisierten Rechner (1) auf der Ebene von mindestens einem Rad aufweist.

**9.** System zur Steuerung nach Anspruch 6, **dadurch gekennzeichnet, dass** jedes Rad mit einem lokalen, dezentralisierten Rechner (1) gekoppelt ist und es ferner einen Zentralrechner aufweist, der mit jedem lokalen Rechner zusammenwirkt.

FIG.1

FIG.2

FIG.3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   EP 0426338 A
*   US 6701235 B